# EUROPEAN PATENT SPECIFICATION

(11) **EP 3 736 078 B1**
(45) Date of publication and mention of the grant of the patent: **18.10.2023**
(21) Application number: 20171722.0
(22) Date of filing: 28.11.2018
(51) Int. Cl.: B23K 31/12, B23K 9/095, B23K 9/12, B23K 37/047

(54) **SYSTEM SUPPORTING WELD QUALITY ACROSS A MANUFACTURING ENVIRONMENT**
SYSTEM ZUR UNTERSTÜTZUNG DER SCHWEISSQUALITÄT ÜBER EINE FERTIGUNGSUMGEBUNG HINWEG
SYSTÈME DE SUPPORT DE QUALITÉ DE SOUDURE DANS UN ENVIRONNEMENT DE FABRICATION

(30) Priority: 29.11.2017 US 201762592072 P; 11.09.2018 US 201816127473
(43) Date of publication of application: 11.11.2020
(62) Divisional of application: 18208880.7
(73) Proprietor: Lincoln Global, Inc., Santa Fe Springs, CA 90670 (US)
(72) Inventor: DANIEL, Joseph A., Sagamore Hills, OH 44067 (US)
(74) Representative: Grosse Schumacher Knauer von Hirschhausen

(56) References cited:
- JP-B2- 5 421 172
- US-A1- 2014 042 136

## Description

### FIELD OF THE INVENTION

The invention is related to a welding system according to claim 1 (see, for example, US 2014/042136 A1).

### TECHNICAL BACKGROUND

When welding workpieces of the same type across many manufacturing cells within a manufacturing environment, it can be challenging to maintain a consistent quality of those welded workpieces across the manufacturing cells. Over time, weld settings of the various welding equipment within the manufacturing cells can get changed and become very divergent from one cell to the next. As a result, the quality of a same type of welded workpiece can become divergent from one cell to the next. However, it is desirable to maintain a consistent "good" quality of workpieces across the manufacturing environment.

### DESCRIPTION

In order to improve, especially constant or consistent, quality in welding, a welding system is described according to claim 1.

Preferred embodiments are subject of the subclaims.

The present invention includes a manufacturing cell supporting welding of a sequence of welds to manufacture a workpiece. The manufacturing cell includes robotic welding equipment configured to make robotic welds as at least a portion of manufacturing a workpiece, and non-robotic welding equipment configured to allow a human operator to make non-robotic (e.g., manual or semi-automatic) welds as at least a portion of manufacturing the workpiece. The manufacturing cell also includes a weld sequence controller configured to control timing associated with making the robotic welds and the non-robotic welds as a sequence of welds to manufacture the workpiece. In accordance with one embodiment, the timing and the sequence of welds is predetermined and fixed before welding begins. Locations of the non-robotic welds to be made to manufacture the workpiece cannot be reached by the robotic welding equipment, in accordance with one embodiment. In one embodiment, the weld sequence controller is configured to adapt at least one of a position and timing of a subsequent weld to be made in the sequence of welds, while manufacturing the workpiece, based on a condition of a previous weld of the sequence of welds. In one embodiment, the weld sequence controller is configured to adapt the sequence of welds, while manufacturing the workpiece, by adding a non-robotic weld as a next weld to be made when an immediate previous weld in the sequence of welds is a robotic weld that was missed by the robotic welding equipment. The location on the workpiece of the next weld to be made, non-robotically, is the same as the location of the immediate previous weld. In one embodiment, the weld sequence controller is configured to determine if an immediate previous weld made, of the sequence of welds, is defective based on at least one quality parameter of the immediate previous weld made. In one embodiment, the weld sequence controller is configured to adapt the sequence of welds, while manufacturing the workpiece, by adding a non-robotic weld as a next weld to be made when an immediate previous weld in the sequence of welds is a robotic weld that was determined to be defective. The location on the workpiece of the next weld to be made, non-robotically, is the same as the location of the immediate previous weld. In one embodiment, the manufacturing cell includes at least one sensor associated with at least one weld of the sequence of welds. The sensor is configured to sense at least one quality parameter associated with generating at least one weld and report the quality parameter, directly or indirectly, to the weld sequence controller. A sensor may include, for example, a visual spectrum sensor, a radiographic sensor, a laser sensor, an electromagnetic sensor, an infrared sensor, a temperature sensor, a spectrometer sensor, or an ultrasonic sensor. A quality parameter may be related to, for example, a weld position on the workpiece, a weld bead size, a weld bead shape, weld penetration, weld fusion, weld porosity, weld cracking, weld inclusion, a weld discontinuity, an arc plasma type, or an arc plasma temperature.

Numerous aspects of the general inventive concepts will become readily apparent from the following detailed description of exemplary embodiments, from the claims, and from the accompanying drawings.

### BRIEF DESCRIPTION OF THE DRAWINGS

FIG. 1 illustrates one example not falling under the scope of the present invention of a manufacturing cell for manufacturing a workpiece within a manufacturing environment;
FIG. 2 illustrates one example not falling under the scope of the present invention of a system supporting weld quality across a manufacturing environment having a plurality of manufacturing cells that are in wired communication with a central controller via a communication network;
FIG. 3 illustrates one example not falling under the scope of the present invention of a system supporting weld quality across a manufacturing environment having a plurality of manufacturing cells that are in wireless communication with a central controller via a communication network;
FIG. 4 illustrates one example not falling under the scope of the present invention of a manufacturing cell communicating weld parameter data to a central controller;
FIG. 5 illustrates one example not falling under the scope of the present invention of a central controller communicating updated weld settings to a manufacturing cell;
FIGS. 6A, 6B, and 6C illustrate examples not falling under the scope of the present invention of three types of data analysis that may be performed by a central controller;
FIG. 7 illustrates example embodiments of sensors for monitoring actual welding parameters within manufacturing cells of a manufacturing environment;
FIG. 8 illustrates a flow chart of one example not falling under the scope of the present invention of a method to support weld quality across a manufacturing environment;
FIG. 9 illustrates another embodiment of a manufacturing cell for manufacturing a workpiece within a manufacturing environment;
FIG. 10 illustrates a flow chart of one embodiment of a method to support welding a sequence of welds within a manufacturing cell;
FIG. 11 illustrates example embodiments of sensors for monitoring quality parameters of a sequence of welds that are made when manufacturing a workpiece within a manufacturing cell; and
FIG. 12 illustrates an example embodiment of a controller (e.g., a central controller, a cell controller, or a weld sequence controller used in the systems described herein).

### DETAILED DESCRIPTION

Systems and methods for supporting weld quality are disclosed. For example, weld parameter data may be observed across all manufacturing cells (an entire factory/installed base), analyzed, and pushed back to individual manufacturing cells as updated weld settings, providing the basis of quality improvement with a larger group of machines from which to learn which settings make quality ("good") welds on a particular type of workpiece (this is different than just one machine setting limits). Such a larger data set provides a more robust set of weld parameter data to determine weld settings which produce quality welds.

One example not falling under the scope of the present invention includes multiple manufacturing cells within a manufacturing environment, where each manufacturing cell includes a cell controller and welding equipment. A communication network supports data communications between a central controller and the cell controller of each of the manufacturing cells. The central controller collects actual weld parameter data from the cell controller of each of the manufacturing cells, via the communication network. The actual weld parameter data include values and ranges of actual welding parameters used by the welding equipment in each of the multiple manufacturing cells to weld the same type of workpiece. The central controller aggregates and analyzes the weld parameter data collected from across the manufacturing cells to generate updated weld settings for the same type of workpiece being welded in each of the manufacturing cells. The updated weld settings are communicated to the cell controller of each of the manufacturing cells via the communication network to be used by the respective welding equipment.

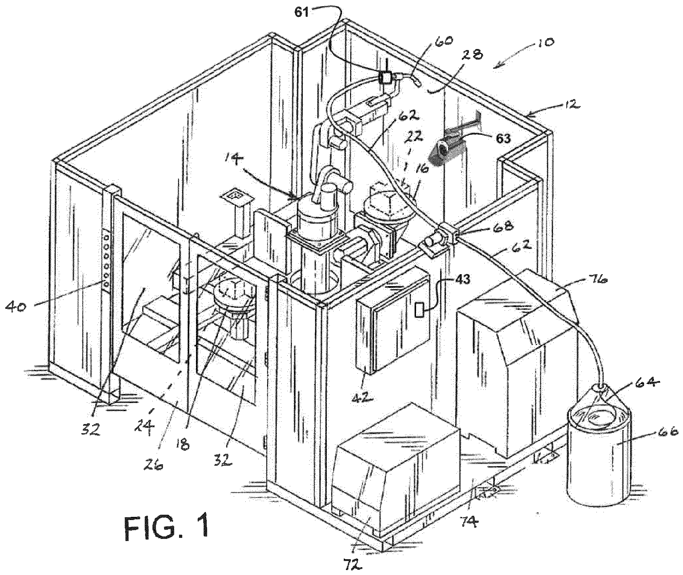

The examples and figures herein are illustrative only and are not meant to limit the subject invention, which is measured by the content of the claims. Referring now to the drawings, wherein the showings are for the purpose of illustrating exemplary embodiments of the subject invention only and not for the purpose of limiting same, FIG. 1 illustrates one example not falling under the scope of the present invention of a manufacturing cell 10 for manufacturing a workpiece within a manufacturing environment. The manufacturing cell 10 is discussed in detail herein with respect to being configured with welding equipment. The welding equipment may be robotic welding equipment, non-robotic welding equipment (e.g., semi-automatic or manual), or some combination thereof. It is envisioned that a manufacturing cell may be used to weld a workpiece by a process such as, for example, gas metal arc welding (GMAW), flux-cored arc welding (FCAW), or gas tungsten arc welding (GTAW). Other processes for welding are possible as well.

With reference to FIG. 1, the manufacturing cell 10 is a welding manufacturing cell and generally includes a frame 12, a robot 14 disposed within the frame, and first and second welding tables 16 and 18, respectively, also disposed within the frame. The manufacturing cell 10 is useful for welding work pieces (parts) 22 and 24. In FIG. 1, the frame 12 includes a plurality of side walls and doors to enclose the robot 14 and the welding tables 16 and 18. Even though a substantially rectangular configuration in plan view is shown, the frame 12, and the cell 10, can take numerous configurations.

A front access door 26 mounts to the frame 12 to provide access to the interior of the frame. The front access door 26 can take a bi-fold configuration where the door includes two hinge sets: a first hinge set attaching the door 26 to the frame 12 and a second hinge set attaching one panel of the door to another panel. Nevertheless, the front access door 26 can take other configurations such as a sliding door or a swinging door. Similarly, a rear access door 28 also mounts to the frame 12. The rear access door 28 also takes a bi-fold configuration; however, the rear access door can take other configurations such as those discussed with reference to the front access door 26. Windows 32 can be provided on either door (only depicted on front door 26). The windows can include a tinted safety screen, for example.

A control panel 40 is provided on the frame 12 adjacent the front door 26. Control knobs and/or switches provided on the control panel 40 communicate with controls housed in a controls enclosure 42 that is also mounted to the frame 12. The controls on the control panel 40 can be used to control operations performed in the manufacturing cell 10 in a similar manner to controls used with known manufacturing cells.

The robot 14 mounts on a pedestal that mounts on a support. The robot 14 is centered with respect to the welding tables 16 and 18 and includes multiple axes of movement. If desired, the pedestal can rotate with respect to the support similar to a turret. Accordingly, some sort of drive mechanism, e.g. a motor and transmission (not shown), can be housed in the pedestal and/or the support for rotating the robot 14. In accordance with another example, the pedestal is replaced with a positioner that holds and re-positions the workpiece (e.g., via rotation and/or changing elevation of the workpiece) for welding a sequence of welds, for example.

In one example, a welding gun 60 attaches to a distal end of an arm of the robot 14. The welding gun 60 can be similar to those that are known in the art. A flexible tube or conduit 62 attaches to the welding gun 60. Consumable welding electrode wire 64, which can be stored in a container 66, is delivered to the welding gun 60 through the conduit 62. A wire feeder 68 attaches to the frame 12 to facilitate the delivery of consumable welding wire 64 to the welding gun 60. Even though the robot 14 is shown mounted to a base or lower portion of the frame 12, if desired, the robot 14 can mount to an upper structure of the frame and depend downwardly into the manufacturing cell 10. In one example, a welding power source 72 for the welding operation mounts to and rests on a platform 74 that is connected to and can be a part of the frame 12.

In FIG. 1, a sensor 61 is mounted proximate the welding gun 60. For example, the sensor 61 is a voltage sensor configured to sense a welding voltage (one type of welding parameter) during a welding operation. In other examples, the sensor 61 may be a different type of sensor, possibly mounted elsewhere within the manufacturing cell 10. For example, the sensor 61 may be a current sensor for sensing a welding current, a motion sensor (e.g., having an accelerometer) for sensing a travel speed of the welding gun 60 (and the arc produced by the welding gun 60), a speed sensor (e.g., a motor with an RPM output on the wire feeder 68) for sensing a wire feed speed, a visual sensor (e.g., a camera) configured to sense an electrode stick out distance, or a flow sensor for sensing a gas flow (e.g., a rate of flow of a shielding gas). In general, multiple sensors can be employed throughout the manufacturing cell to sense actual welding parameters during a welding operation. The welding parameters sensed by the sensors may be communicated (e.g., wired or wirelessly) to a welding power source and/or a controller of the manufacturing cell 10. Sensor fusion or data fusion techniques may be employed to combine data from two or more sensors to generate weld parameter data associated with a welding operation on a workpiece. Furthermore, weld parameter data can include data representative of welding parameters that were selected by a human operator, stored in a memory of the welding equipment (e.g., a memory 43 within the controls enclosure 42), and actually used by the welding equipment to make welds on a workpiece.

In FIG. 1, another sensor 63 is mounted near a workpiece 22 to observe a quality parameter of welds created on the workpiece 22. In accordance with one example, the sensor 63 is configured to observe welds created on the workpiece 22. For example, the sensor 63 may be a visual spectrum sensor (e.g., a camera), a radiographic sensor, a laser sensor, an electromagnetic sensor, an infrared sensor, a temperature sensor, a spectrometer sensor, or an ultrasonic sensor. The quality parameter may be related to, for example, a weld position on the workpiece/part 22, a weld bead size, a weld bead shape, weld penetration, weld fusion, weld porosity, weld cracking, weld inclusion, a weld discontinuity, an arc plasma type, or an arc plasma temperature. Such sensing can be accomplished during welding and/or after welding. Sensor fusion or data fusion techniques may be employed to combine data from two or more sensors to generate quality parameter data associated with a weld. Furthermore, in one example, a user interface is provided for an operator to easily change weld settings. For example, a user may change one or more weld settings associated with welding a particular weld on a workpiece such that a higher quality weld is created. The user interface may be, for example, the control panel 40.

A cell controller 76 communicates with and controls various portions of the welding equipment of the manufacturing cell 10 (including the robot 14), and rests and mounts on the platform 74. For example, the cell controller 76 can communicate with the controls in the controls enclosure 42 and the power source 72. The cell controller 76 is also configured to communicate with an external central controller, as discussed later herein. In one example, the cell controller 76 and, for example, welding equipment (e.g., the welding power source 72) may communicate with each other (exchange data). The welding equipment may communicate actual weld parameter data to the cell controller 76 and the cell controller 76 may provide updated weld settings to the welding equipment. The cell controller 76 may gather data from many different devices (robot, power supply, control enclosure, tooling, sensors, etc.) of the manufacturing cell in a wired and/or wireless manners.

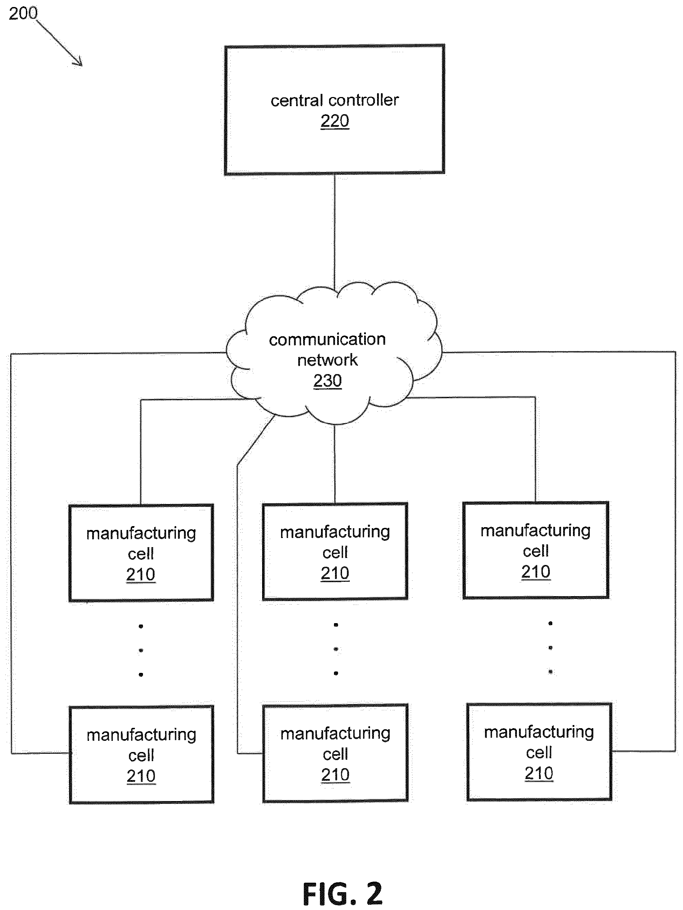

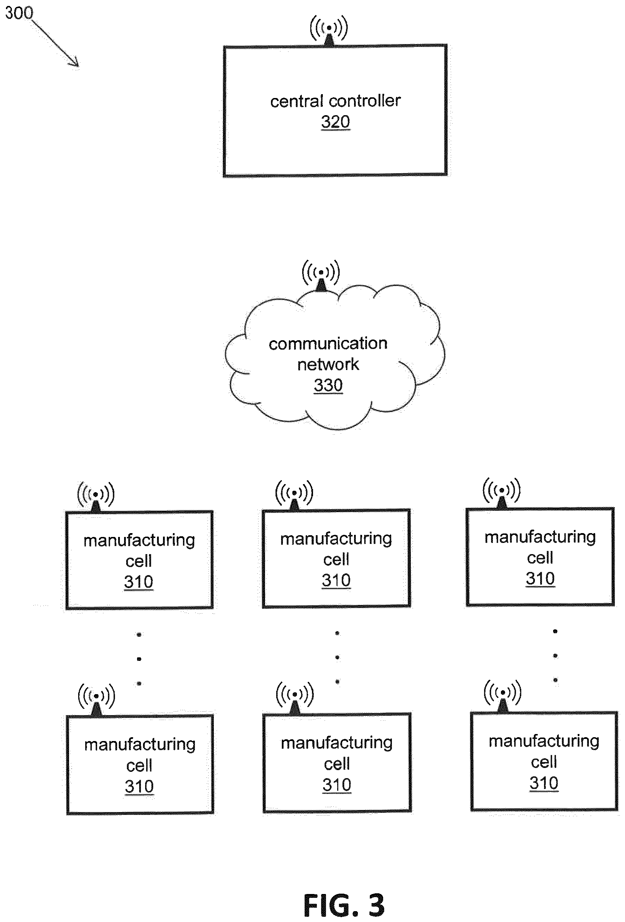

FIG. 2 illustrates one example not falling under the scope of the present invention of a system 200 supporting weld quality across a manufacturing environment having a plurality of manufacturing cells 210 that are in wired communication with a central controller 220 via a communication network 230. For example, each of the manufacturing cells 210 may be similar to the manufacturing cell 10 of FIG. 1 supporting welding equipment and having a cell controller (e.g., similar to cell controller 76 of FIG. 1). In FIG. 2, communication between the manufacturing cells 210 and the central controller 220 via the communication network 230 is accomplished via wired communications (e.g., copper wire or fiber optics). Similarly, FIG. 3 illustrates one example not falling under the scope of the present invention of a system 300 supporting weld quality across a manufacturing environment having a plurality of manufacturing cells 310 that are in wireless communication with a central controller 320 via a communication network 330. Systems having combinations of wired and wireless communications are also possible as well. In one example, the manufacturing cells 210 and/or 310 are robotic manufacturing cells. In another example, the manufacturing cells 210 and/or 310 are non-robotic (e.g., semi-automatic or manual) manufacturing cells operated by a human user to generate welds on a workpiece/part. In still another example, the manufacturing cells 210 and/or 310 include both robotic and non-robotic welding equipment.

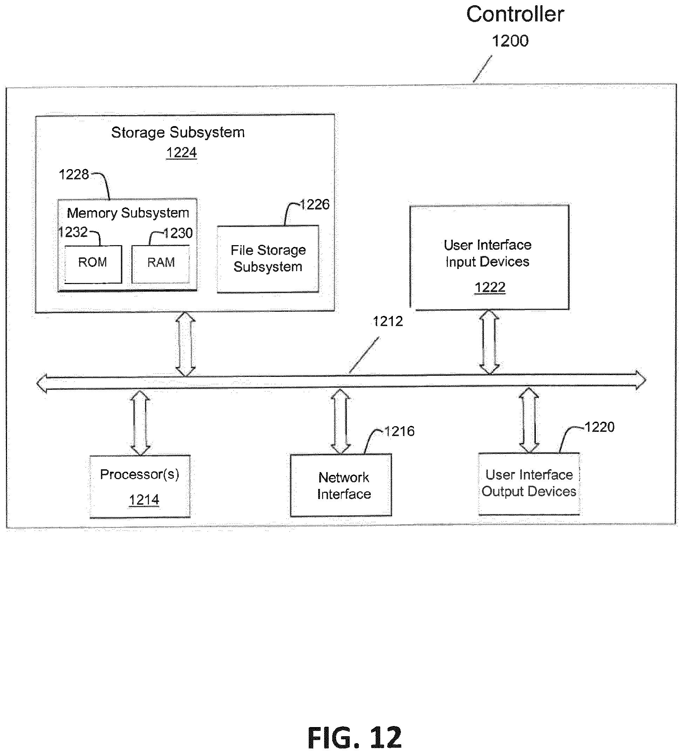

Referring again to FIG. 2 and FIG. 3, each manufacturing cell 210 (or 310) includes a cell controller (e.g., similar to the cell controller 76 of FIG. 1). Each cell controller and the central controller 220 (or 320) may share one or more characteristics with the controller 1200 of FIG. 12 (discussed later herein). The communication network 230 (or 330) may be configured as, for example, a local area network, a wide area network, the internet, or some combination thereof and may include, for example, a server computer, a network storage device, a wireless router, a modem, or some combination thereof. The cell controller of each manufacturing cell 210 (or 310) is configured to communicate with the central controller 220 (or 320) via the communication network 230 (or 330).

In a simple (minimal) example, the communication network 230 may be configured as, for example, digital communication cables (e.g., copper or fiber optic) connected between digital communication circuits at the central controller 220 and at the manufacturing cells 210. The digital communication circuits are configured to send and receive digital data between the central controller 220 and the manufacturing cells 210 over the digital communication cables. Also, in a simple (minimal) example, the wireless communication network 330 may be configured as, for example, radio frequency antennas connected to wireless digital communication circuits at the central controller 320 and at the manufacturing cells 310. The wireless digital communication circuits are configured to transmit and receive radio frequency signals (e.g., WiFi signals) encoded with digital data between the central controller 320 and the manufacturing cells 310 via the antennas. Therefore, the communication network 230 (and 330) may have elements located away from the central controller 220 (and 320) and the manufacturing cells 210 (and 310) and/or at the central controller 220 (and 320) and the manufacturing cells 210 (and 310).

A cell controller (e.g., cell controller 76 of FIG. 1) of a manufacturing cell acts as a communication hub for the manufacturing cell and gathers all of the actual weld parameter data for that manufacturing cell. The central controller 220 (or 320) collects actual weld parameter data from the manufacturing cells 210 (or 310) across the manufacturing environment over time to form aggregated weld parameter data for a same type of workpiece being welded in each of the multiple manufacturing cells across the manufacturing environment. The actual weld parameter data include values and ranges of actual welding parameters (sensed and/or user-selected) used by the welding equipment in each of the multiple manufacturing cells to weld the same type of workpiece. The actual welding parameters may include, for example, a welding voltage, a welding current, travel speed, wire feed speed, electrode stick out distance, and gas flow rate. The values of the actual welding parameters may be the same or different from weld to weld on a workpiece. Therefore, the aggregated weld parameter data is sorted by specific weld locations on a particular workpiece type.

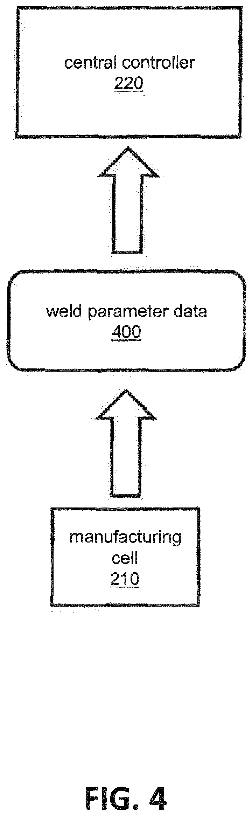

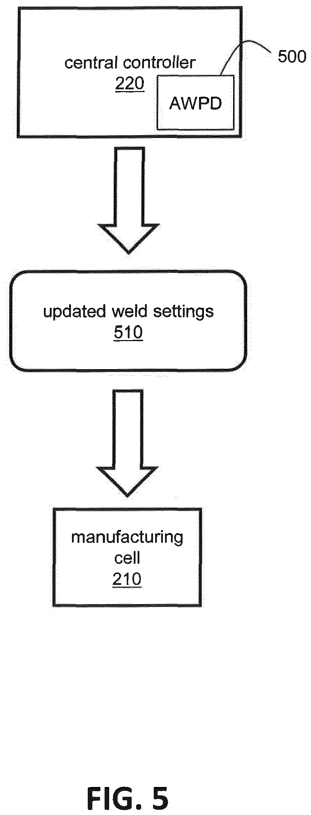

FIG. 4 illustrates one example not falling under the scope of the present invention of a manufacturing cell 210 communicating weld parameter data 400 to a central controller 220 as the central controller 220 collects weld parameter data from multiple manufacturing cells across the manufacturing environment. FIG. 5 illustrates one example not falling under the scope of the present invention of the central controller 220 communicating updated weld settings 510 to a manufacturing cell 210. Referring to FIG. 4 and FIG. 5, the central controller 220 collects the weld parameter data 400 from the multiple cells to form aggregated weld parameter data (AWPD) 500. The central controller 220 analyzes the aggregated weld parameter data (AWPD) 500 and generates updated weld settings 510 which are communicated to each of the multiple manufacturing cells 210 within the manufacturing environment. Similar to the actual welding parameters, the updated weld settings may include selectable settings of values and ranges for a welding voltage, a welding current, travel speed, wire feed speed, electrode stick out distance, and gas flow rate, for example. The updated weld settings may be the same or may be different for each weld to be made on a particular type of workpiece, depending on the nature of the welds to be made.

In accordance with one example, it is assumed that the aggregated weld parameter data is representative of actual welding parameters that were used to make "good" quality welds on the same type of workpiece across the manufacturing environment. In accordance with another example, the collected weld parameter data is tagged as being from a "good" quality weld or not, for example. In this manner, the resultant updated weld settings 510 should be representative of values and ranges of weld settings that will produce "good" quality welds.

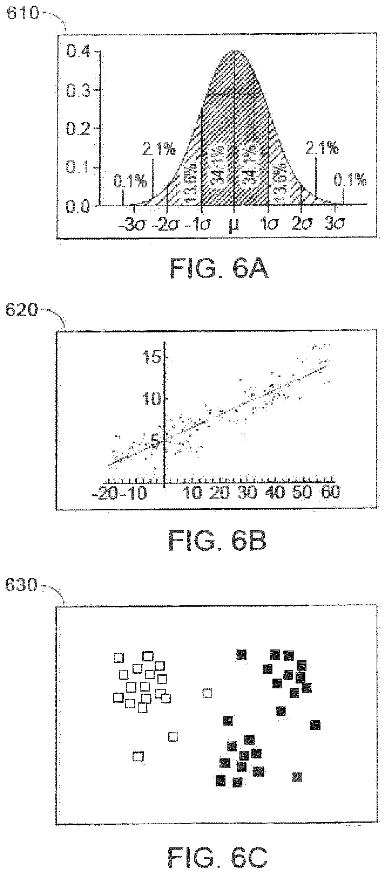

FIGS. 6A, 6B, and 6C illustrate examples not falling under the scope of the present invention of three types of data analysis that may be performed by a central controller on aggregated weld parameter data (AWPD) to generate updated weld settings. The first type of analysis 610 is statistical analysis. For example, a mean and a standard deviation of actual weld parameter data (collected across the manufacturing environment for a particular actual welding parameter used to make a particular weld on a same type of workpiece in manufacturing cells across the manufacturing environment) are calculated using statistical techniques. The mean and standard deviation are then used to generate an updated value and range (settings) for the particular welding parameter. The second type of analysis 620 is regression analysis and the third type of analysis 630 is cluster analysis. In a similar manner, calculated characteristics resulting from the regression analysis or the cluster analysis may be used to generate an updated value and range (settings) for a particular welding parameter. Other types of analyses may be possible as well.

The updated weld settings, for each welding parameter, are communicated from the central controller to the cell controller of each of the manufacturing cells in the manufacturing environment via the communication network. In one example, each cell controller communicates the updated weld settings to the welding equipment in each respective manufacturing cell, and the welding equipment uses the updated weld settings (e.g., stored in a memory of the welding equipment) to make subsequent welds on workpieces of the same type of workpiece. For example, in a non-robotic situation, the user is presented with the selectable values and ranges of the updated weld settings to perform a welding operation to create a particular weld on the same type of workpiece. The user makes a selection from the updated weld settings. In a robotic situation, the cell controller of the manufacturing cell limits the robotic welding equipment to using only those welding parameters defined by the updated weld settings for performing a welding operation to create a particular weld on the same type of workpiece. In this manner, by using the updated weld settings which are based on the actual welding parameters previously used to produce "good" quality welds across the manufacturing environment, subsequent welds produced on the same type of workpiece should have a better chance of being of "good" quality, and consistent quality should be maintained across the manufacturing environment. The updated weld settings prevent a user and/or a robotic system from using weld settings that deviate from the values and ranges of the updated weld settings, which would possibly result in "poor" quality welds.

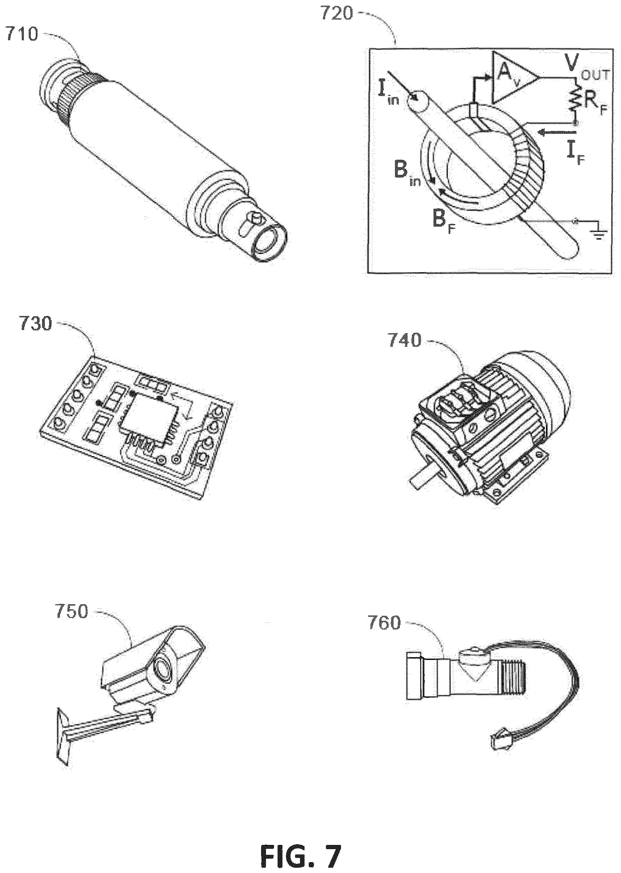

FIG. 7 illustrates example embodiments of sensors for monitoring actual welding parameters within manufacturing cells of a manufacturing environment (e.g., as sensor 61 of FIG. 1). The sensors may be of different types mounted at various places within a manufacturing cell or within equipment of a manufacturing cell. For example, in accordance with one embodiment and referring to FIG. 7, a voltage sensor 710 is configured to sense a welding voltage (one type of welding parameter) during a welding operation. Furthermore, a current sensor 720 is configured to sense a welding current, a motion sensor 730 (e.g., having an accelerometer) is configured to sense a travel speed of a welding gun (and the arc produced by the welding gun), a speed sensor 740 (e.g., having a motor with an RPM output on a wire feeder) is configured to sense a wire feed speed, a visual sensor 750 (e.g., a camera) is configured to sense an electrode stick out distance, and a flow sensor 760 is configured to sense a gas flow (e.g., a rate of flow of a shielding gas). In general, multiple sensors of various types can be employed throughout a manufacturing cell to sense actual welding parameters. Such sensing can be accomplished during a welding operation. The welding parameters sensed by the sensors may be communicated (e.g., wired or wirelessly) to a welding power source and/or a cell controller of the manufacturing cell. Sensor fusion or data fusion techniques may be employed (e.g., in a cell controller or in a central controller), in accordance with some embodiments, to combine data from two or more sensors to generate weld parameter data associated with a welding operation on a workpiece.

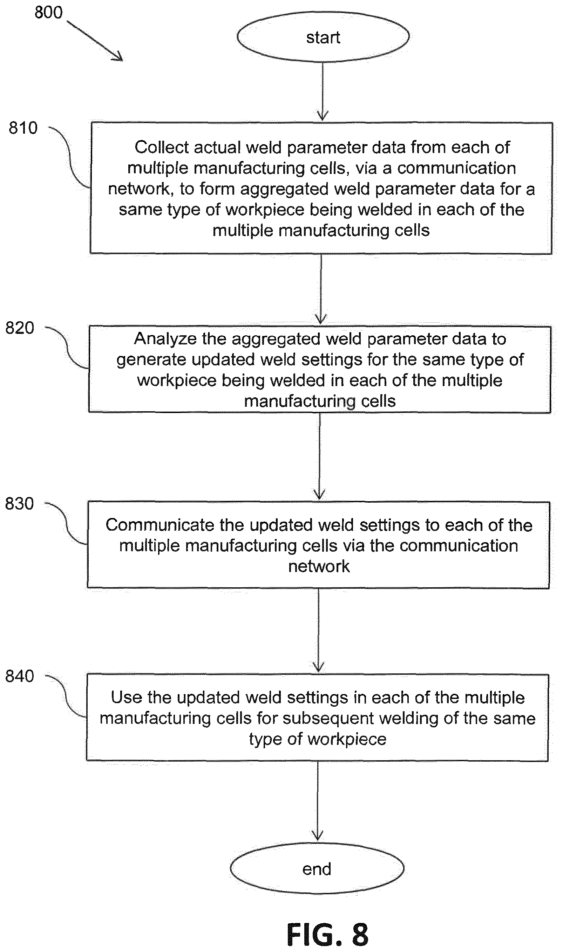

FIG. 8 illustrates a flow chart of one example not falling under the scope of the present invention of a method 800 to support weld quality across a manufacturing environment. The method 800 includes, at block 810, collecting actual weld parameter data from each of multiple manufacturing cells across a manufacturing environment, via a communication network, to form aggregated weld parameter data for a same type of workpiece being welded in each of the multiple manufacturing cells. The actual weld parameter data include value and ranges of actual welding parameters (sensed and/or user-selected) such as, for example, welding voltage, welding current, travel speed, wire feed speed, electrode stick out distance, and gas flow rate used by welding equipment in each of the multiple manufacturing cells to weld the same type of workpiece. At block 820, the aggregated weld parameter data is analyzed to generate updated weld settings for the same type of workpiece being welded in each of the multiple manufacturing cells. The updated weld settings include values and ranges of, for example, welding voltage, welding current, travel speed, wire feed speed, electrode stick out distance, and gas flow rate. At block 830, the updated weld settings are communicated to each of the multiple manufacturing cells across the manufacturing environment via the communication network. For example, the central controller communicates the updated weld settings to each of the cell controllers of the multiple manufacturing cells, and each cell controller communicates the updated weld settings to the respective welding equipment of the respective manufacturing cell.

At block 840, the updated weld settings are stored and programmed to be used in each of the multiple manufacturing cells by the welding equipment for subsequent welding of the same type of workpiece. For example, in a non-robotic situation, the user is presented with the selectable values and ranges of the updated weld settings to perform a welding operation to create a particular weld on the same type of workpiece. In a robotic situation, the cell controller of the manufacturing cell limits the robotic welding equipment to using only those weld parameters defined by the updated weld settings for performing a welding operation to create a particular weld on the same type of workpiece. In this manner, by using the updated weld settings which are based on the actual welding parameters previously used to produce "good" quality welds across the manufacturing environment, subsequent welds produced on the same type of workpiece should have a better chance of being of "good" quality, and consistent quality should be maintained across the manufacturing environment.

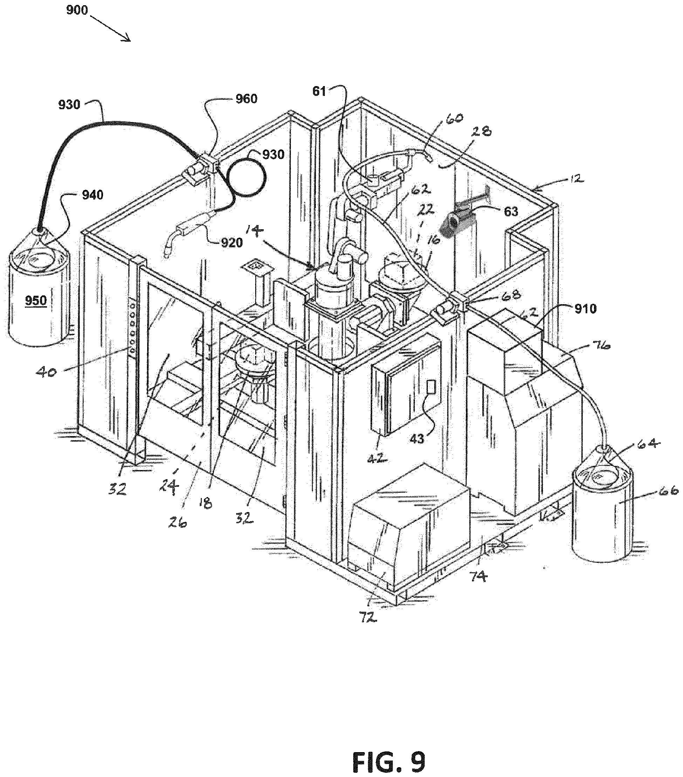

FIG. 9 illustrates another embodiment of a manufacturing cell 900 for manufacturing a workpiece within a manufacturing environment. The manufacturing cell 900 is similar to the manufacturing cell 10 of FIG. 1. However, the manufacturing cell 900 also includes a weld sequence controller (or welding job sequencer) 910. In another embodiment, the weld sequence controller 910 is part of the cell controller 76. The weld sequence controller 910 may share one or more characteristics with the controller 1200 of FIG. 12 discussed later herein. The manufacturing cell 900 also includes non-robotic welding equipment (e.g., for a human welder to perform semi-automatic welding) which includes a welding gun 920 which can be similar to those that are known in the art. A flexible tube or conduit 930 attaches to the welding gun 920. Consumable welding electrode wire 940, which can be stored in a container 950, is delivered to the welding gun 920 through the conduit 930. A wire feeder 960 attaches to the frame 12 to facilitate the delivery of consumable welding wire 940 to the welding gun 920.

In an alternative embodiment, the welding gun 920 is replaced with a stick electrode holder (not shown) configured for use in stick welding (a type of non-robotic welding performed by a human welder). In accordance with another embodiment, instead of the manufacturing cell 900 having both the welding gun 60 for robotic welding and the welding gun 920 for non-robotic welding, the welding gun 60 can be detached from the robot 14 and connected to the wire feeder 960 to perform non-robotic welding. The same welding power source 72 can support both robotic welding and non-robotic welding, in accordance with one embodiment. In an alternative embodiment, the welding power source 72 supports robotic welding and an additional welding power source (not shown) supports non-robotic welding (e.g., stick welding or semi-automatic welding performed by a human welder).

In the manufacturing cell 900, the robotic welding equipment is configured to make robotic welds as at least a portion of manufacturing a workpiece. The non-robotic welding equipment is configured to allow a human operator (welder) to make non-robotic welds as at least another portion of manufacturing the workpiece. The weld sequence controller 910 is configured to control the order and timing associated with making the robotic welds and the non-robotic welds as a sequence of welds to manufacture the workpiece. The general concept of weld sequencing is described in U.S. Patent No. 9,937,577 which is incorporated herein by reference in its entirety. However, as further described herein, weld sequencing can include a sequence of welds that includes both robotic and non-robotic welds. Furthermore, as described herein, the sequence of welds may be adaptable based on one or more conditions of a weld.

In accordance with one embodiment, the timing and the order of the sequence of welds is predetermined and fixed before welding begins. It may be assumed, in one embodiment, that locations of non-robotic welds to be made on a workpiece cannot be reached by the robotic welding equipment, therefore, a human welder intervenes (in accordance with the defined sequence of welds) to make those welds that the robotic welding equipment cannot reach.

In accordance with one embodiment, the weld sequence controller 910 is configured to adapt at least one of position (position in the sequence) and timing of a subsequent weld to be made in the sequence of welds, while manufacturing the workpiece, based on a condition of a previous weld made of the sequence of welds. For example, in one embodiment, the weld sequence controller 910 is configured to adapt the sequence of welds, while manufacturing the workpiece, by adding a non-robotic weld (in real time) as a next weld to be made when an immediate previous weld in the sequence of welds is a robotic weld that was missed by the robotic welding equipment. Therefore, the location on the workpiece of the next weld to be made, non-robotically, is the same as the location of the immediate previous weld that was missed. In this way, a human operator (welder) can be instructed by the weld sequence controller 910 to intervene and complete the missed weld.

In accordance with one embodiment, the weld sequence controller 910 is configured to determine if an immediate previous weld made, of the sequence of welds, is defective based on at least one quality parameter of the immediate previous weld made. Furthermore, the weld sequence controller 910 is configured to adapt the sequence of welds, while manufacturing the workpiece, by adding a non-robotic weld (in real time) as a next weld to be made when the immediate previous weld made in the sequence of welds is a robotic weld that was determined to be defective. Therefore, the location on the workpiece of the next weld to be made, non-robotically, is the same as the location of the immediate previous weld. In this way, a human operator (welder) can be instructed by the weld sequence controller 910 to intervene and correct the defective weld.

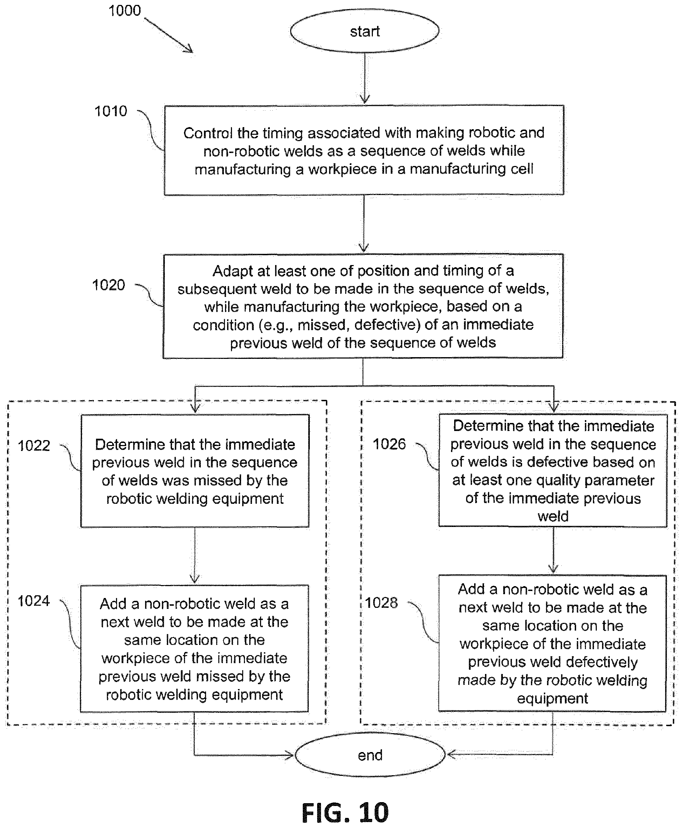

FIG. 10 illustrates a flow chart of one embodiment of a method 1000 to support welding a sequence of welds within a manufacturing cell. The method includes, at block 1010, controlling the timing (e.g., position within the sequence) associated with making robotic and non-robotic welds as a sequence of welds while manufacturing a workpiece in a manufacturing cell. For example, a sequence of welds may include robotic welds to made that are interleaved in time with non-robotic welds to be made, where the timing of the non-robotic welds with respect to the robotic welds is based, at least in part, on the robotic welding equipment not being able to reach certain locations on the workpiece.

At block 1020, at least one of position and timing of a subsequent weld to be made is adapted in the sequence of welds, while manufacturing the workpiece, based on a condition of an immediate previous weld of the sequence of welds. As one example of block 1020, at block 1022, a determination is made as to whether the immediate previous weld in the sequence of welds was missed (a condition) by the robotic welding equipment based on at least one quality parameter of the immediate previous weld. If so, then at block 1024, a non-robotic weld is added to the sequence of welds as a next weld to be made at the same location on the workpiece of the immediate previous weld that was missed by the robotic welding equipment. Thus, the subsequent weld that was going to be made in the un-adapted sequence of welds is pushed out in time and position in the adapted sequence to make room for the added non-robotic weld.

As another example of block 1020, at block 1026, a determination is made as to whether the immediate previous weld in the sequence of welds is defective (a condition) based on at least one quality parameter of the immediate previous weld. If so, then at block 1028, a non-robotic weld is added to the sequence of welds as a next weld to be made at the same location on the workpiece of the immediate previous weld defectively made, for example, by the robotic welding equipment. Again, the subsequent weld that was going to be made in the un-adapted sequence of welds is pushed out in time and position in the adapted sequence to make room for the added non-robotic weld.

In these ways, a weld sequence can be adapted "on-the-fly" while manufacturing a workpiece to allow for the efficient manufacturing of the workpiece within the manufacturing cell. The ability to determine that a weld was "missed" and/or is "defective" is discussed next herein with respect to sensors that detect quality parameters.

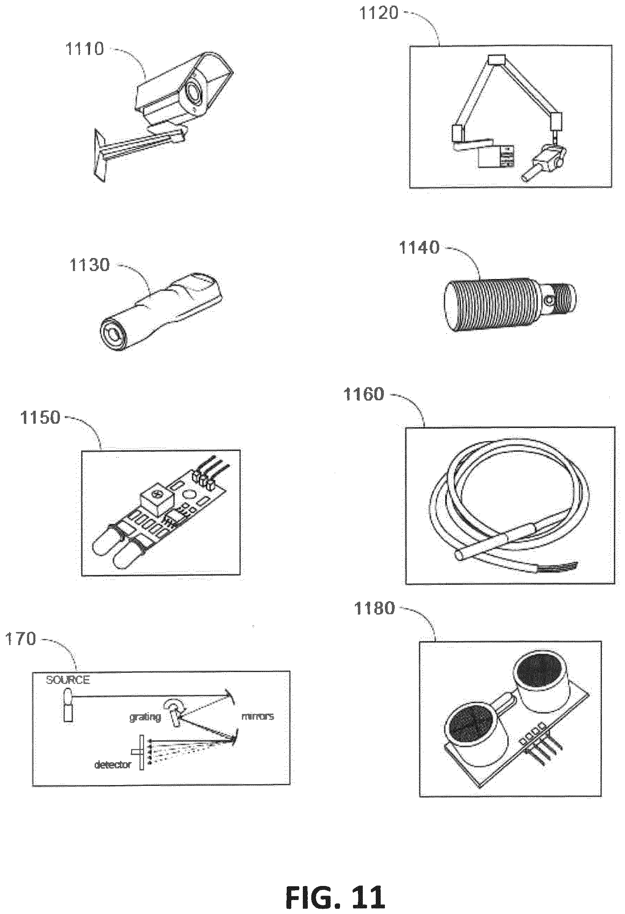

FIG. 11 illustrates example embodiments of sensors (e.g., as sensor 63 of FIG. 1 and FIG. 9) for monitoring quality parameters of a sequence of welds that are made when manufacturing a workpiece within a manufacturing cell. The sensors are configured to observe welds created on the workpiece and report the quality parameters, directly or indirectly, to the weld sequence controller of the manufacturing cell. A quality parameter can be an indication of a missed weld or an indication of the nature of a defective weld (e.g., poor weld penetration).

For example, a sensor for sensing a quality parameter of a weld may be a visual spectrum sensor (e.g., a camera) 1110, a radiographic sensor 1120, a laser sensor 1130, an electromagnetic sensor 1140, an infrared sensor 1150, a temperature sensor 1160, a spectrometer sensor 1170, or an ultrasonic sensor 1180. Other types of sensors are possible as well, in accordance with other embodiments. A quality parameter may be related to, for example, the presence/absence of a weld at a weld position on the workpiece/part, a weld bead size, weld penetration, weld fusion, weld porosity, weld cracking, weld inclusion, a weld discontinuity, an arc plasma type, or an arc plasma temperature. Other quality parameters are possible as well, in accordance with other embodiments. Such sensing can be accomplished on-the-fly in real time during welding, in accordance with one embodiment. Sensor fusion or data fusion techniques may be employed, in accordance with some embodiments, to combine data from two or more sensors to determine the existence of a missed weld or a defective weld.

FIG. 12 illustrates an example embodiment of a controller 1200 (e.g., a central controller 220 or 320, a cell controller 76, or a weld sequence controller 910 used in the systems described herein). The controller 1200 includes at least one processor 1214 which communicates with a number of peripheral devices via bus subsystem 1212. These peripheral devices may include a storage subsystem 1224, including, for example, a memory subsystem 1228 and a file storage subsystem 1226, user interface input devices 1222, user interface output devices 1220, and a network interface subsystem 1216. The input and output devices allow user interaction with the controller 1200. Network interface subsystem 1216 provides an interface to outside networks and is coupled to corresponding interface devices in other computer systems. For example, the cell controller 76 of the manufacturing cell 10 may share one or more characteristics with the controller 1200 and may be, for example, a conventional computer, a digital signal processor, and/or other computing device.

User interface input devices 1222 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into the controller 1200 or onto a communication network.

User interface output devices 1220 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from the controller 1200 to the user or to another machine or computer system.

Storage subsystem 1224 stores programming and data constructs that provide or support some or all of the functionality described herein (e.g., as software modules). For example, the storage subsystem 1224 may include analysis software modules that are used in a central controller to analyze aggregated weld parameter data and generate updated weld settings for welding equipment of manufacturing cells across a manufacturing environment.

Software modules are generally executed by processor 1214 alone or in combination with other processors. Memory 1228 used in the storage subsystem can include a number of memories including a main random access memory (RAM) 1230 for storage of instructions and data during program execution and a read only memory (ROM) 1232 in which fixed instructions are stored. A file storage subsystem 1226 can provide persistent storage for program and data files, and may include a hard disk drive, a floppy disk drive along with associated removable media, a CD-ROM drive, an optical drive, or removable media cartridges. The modules implementing the functionality of certain embodiments may be stored by file storage subsystem 1226 in the storage subsystem 1224, or in other machines accessible by the processor(s) 1214.

Bus subsystem 1212 provides a mechanism for letting the various components and subsystems of the controller 1200 communicate with each other as intended. Although bus subsystem 1212 is shown schematically as a single bus, alternative embodiments of the bus subsystem may use multiple buses.

The controller 1200 can be of varying types including a workstation, server, computing cluster, blade server, server farm, or any other data processing system or computing device. Due to the ever-changing nature of computing devices and networks, the description of the controller 1200 depicted in FIG. 12 is intended only as a specific example for purposes of illustrating some embodiments. Many other configurations of the controller 1200 are possible having more or fewer components than the controller depicted in FIG. 12.

While the disclosed embodiments have been illustrated and described in considerable detail, it is not the intention to restrict or in any way limit the scope of the appended claims to such detail. It is, of course, not possible to describe every conceivable combination of components or methodologies for purposes of describing the various aspects of the subject matter. Therefore, the disclosure is not limited to the specific details or illustrative examples shown and described. Thus, this disclosure is intended to embrace alterations, modifications, and variations that fall within the scope of the appended claims. The above description of specific embodiments has been given by way of example. From the disclosure given, those skilled in the art will not only understand the general inventive concepts and attendant advantages, but will also find apparent various changes and modifications to the structures and methods disclosed.

**REFERENCE NUMBERS**

| | | | |
|---|---|---|---|
| | | 610 | analysis |
| 10 | manufacturing cell | | |
| 12 | frame | 620 | analysis |
| 14 | robot | 630 | analysis |
| 16 | welding table | 710 | voltage sensor |
| 18 | welding table | 720 | current sensor |
| 22 | work piece | 730 | motion sensor |
| 24 | work piece | 740 | speed sensor |
| 26 | front access door | 750 | visual sensor |
| 28 | rear access door | 760 | flow sensor |
| 32 | window | 800 | method |
| 40 | control panel | 810 | block |
| 42 | controls enclosure | 820 | block |
| 43 | memory | 830 | block |
| 60 | welding gun | 840 | block |
| 61 | sensor | 900 | manufacturing cell |
| 62 | conduit | 910 | weld sequence controller |
| 63 | sensor | 920 | welding gun |
| 64 | electrode wire | 930 | conduit |
| 66 | container | 940 | welding wire |
| 68 | wire feeder | 950 | container |
| 72 | power source | 960 | wire feeder |
| 74 | platform | 1000 | method |
| 76 | cell controller | 1010 | block |
| 200 | system | 1020 | block |
| 210 | manufacturing cell | 1022 | block |
| 220 | central controller | 1024 | block |
| 230 | communication network | 1026 | block |
| 300 | system | 1028 | block |
| 310 | manufacturing cell | 1110 | visual spectrum sensor |
| 320 | central controller | 1120 | radiographic sensor |
| 330 | communication network | 1130 | laser sensor |
| 400 | weld parameter data | 1140 | electromagnetic sensor |
| 500 | aggregated weld parameter data | 1150 | infrared sensor |
| 510 | weld settings | 1160 | temperature sensor |
| 1170 | spectrometer sensor | 1222 | user interface input device |
| 1180 | ultrasonic sensor | 1224 | storage subsystem |
| 1200 | controller | 1226 | file storae subsystem |
| 1212 | bus subsystem | 1228 | memory subsystem |
| 1214 | processor | 1230 | random access memory |
| 1216 | network interface subsystem | 1232 | read only memory |
| 1220 | user interface output device | | |

## Claims

1. A welding system comprising a workpiece to be manufactured, a manufacturing cell (900) supporting welding of a sequence of welds to manufacture the workpiece (22, 24), the manufacturing cell (900) comprising:
robotic welding equipment configured to make robotic welds as at least a portion of manufacturing a workpiece (22, 24); **characterized in** the manufacturing cell (900) comprising a non-robotic welding equipment configured to allow a human operator to make non-robotic welds as at least a portion of manufacturing the workpiece; and
a weld sequence controller (910) configured to control timing associated with making the robotic welds and the non-robotic welds as a sequence of welds to manufacture the workpiece (22, 24).

2. The welding system of claim 1, wherein the timing and the sequence of welds is predetermined and fixed before welding begins.

3. The welding system of claim 1 or 2, wherein locations of the non-robotic welds to be made to manufacture the workpiece cannot be reached by the robotic welding equipment.

4. The welding system of any of the claims 1 to 3, wherein the weld sequence controller (910) is configured to adapt at least one of a position and timing of a subsequent weld to be made in the sequence of welds, while manufacturing the workpiece (22, 24), based on a condition of a previous weld of the sequence of welds.

5. The welding system of any of the claims 1 to 4 wherein the weld sequence controller (910) is configured to adapt the sequence of welds, while manufacturing the workpiece (22, 24), by adding a non-robotic weld as a next weld to be made when an immediate previous weld in the sequence of welds is a robotic weld that was missed by the robotic welding equipment, and wherein a location on the workpiece (22, 24) of the next weld to be made, non-robotically, is the same as a location of the immediate previous weld.

6. The welding system of any of the claims 1 to 5 wherein the weld sequence controller (910) is configured to determine if an immediate previous weld made, of the sequence of welds, is defective based on at least one quality parameter of the immediate previous weld made.

7. The welding system of any of the claims 1 to 6 wherein the weld sequence controller (910) is configured to adapt the sequence of welds, while manufacturing the workpiece (22, 24), by adding a non-robotic weld as a next weld to be made when an immediate previous weld in the sequence of welds is a robotic weld that was determined to be defective, and wherein a location on the workpiece (22, 24) of the next weld to be made, non-robotically, is the same as a location of the immediate previous weld.

8. The welding system of any of the claims 1 to 7, further comprising at least one sensor associated with the at least one weld of the sequence of welds, wherein the at least one sensor is configured to sense at least one quality parameter associated with generating the at least one weld and report the at least one quality parameter, directly or indirectly, to the weld sequence controller.

9. The welding system of claim8, wherein the at least one sensor includes at least one of a visual spectrum sensor (1110), a radiographic sensor (1120), a laser sensor (1130), an electromagnetic sensor (1140), an infrared sensor (1150), a temperature sensor (1160), a spectrometer sensor (1170), or an ultrasonic sensor (1180).

10. The welding system of claims 8 or 9, wherein the at least one quality parameter is related to at least one of a weld position on the workpiece (22, 24), a weld bead size, a weld bead shape, weld penetration, weld fusion, weld porosity, weld cracking, weld inclusion, a weld discontinuity, an arc plasma type, or an arc plasma temperature.

## Patentansprüche

1. Schweißsystem, das ein herzustellendes Werkstück und eine Fertigungszelle (900), die das Schweißen einer Sequenz von Schweißnähten zur Herstellung des Werkstücks (22, 24) unterstützt, umfasst, wobei die Fertigungszelle (900) umfasst:
robotische Schweißausrüstung, die dafür konfiguriert ist, robotische Schweißungen als mindestens einen Abschnitt der Herstellung eines Werkstücks (22, 24) durchführen;
**dadurch gekennzeichnet, dass** die Fertigungszelle (900) umfasst:
eine nicht-robotische Schweißausrüstung, die dafür konfiguriert ist, es einem menschlichen Bediener zu erlauben, nicht-robotische Schweißungen als mindestens einen Abschnitt der Herstellung des Werkstücks durchführen; und
einen Schweißsequenz-Controller (910), der dafür konfiguriert ist, den zeitlichen Ablauf zu steuern, der mit dem Ausführen der robotische Schweißungen und der nicht-robotischen Schweißungen als eine Sequenz von Schweißungen zur Herstellung des Werkstücks (22, 24) verknüpft ist.

2. Schweißsystem nach Anspruch 1, wobei der zeitliche Ablauf und die Sequenz der Schweißungen vor Beginn des Schweißens vorgegeben und festgelegt werden.

3. Schweißsystem nach Anspruch 1 oder 2, wobei Stellen der nicht-robotischen Schweißungen, die zur Herstellung des Werkstücks auszuführen sind, von der robotischen Schweißausrüstung nicht erreicht werden können.

4. Schweißsystem nach einem der Ansprüche 1 bis 3, wobei der Schweißsequenz-Controller (910) dafür konfiguriert ist, mindestens eines von einer Position und einem zeitlichen Ablauf einer anschließenden Schweißung, die in der Sequenz von Schweißungen auszuführen ist, während das Werkstück (22, 24) hergestellt wird, auf der Grundlage eines Zustands einer vorherigen Schweißung der Sequenz von Schweißungen anzupassen.

5. Schweißsystem nach einem der Ansprüche 1 bis 4, wobei der Schweißsequenz-Controller (910) dafür konfiguriert ist, die Sequenz von Schweißungen, während das Werkstück (22, 24) hergestellt wird, anzupassen, indem er eine nicht-robotische Schweißung als eine nächste auszuführende Schweißung hinzufügt, wenn eine unmittelbar vorherige Schweißung in der Sequenz von Schweißungen eine robotische Schweißung ist, die von der robotischen Schweißausrüstung verfehlt wurde, und wobei eine Stelle der nächsten nicht-robotisch auszuführenden Schweißung an dem Werkstück (22, 24) die gleiche ist wie eine Stelle der unmittelbar vorherigen Schweißung.

6. Schweißsystem nach einem der Ansprüche 1 bis 5, wobei der Schweißsequenz-Controller (910) dafür konfiguriert ist, auf der Grundlage mindestens eines Qualitätsparameters der unmittelbar vorherigen Schweißung zu bestimmen, ob eine unmittelbar vorher ausgeführte Schweißung der Sequenz von Schweißungen fehlerhaft ist.

7. Schweißsystem nach einem der Ansprüche 1 bis 6, wobei der Schweißsequenz-Controller (910) dafür konfiguriert ist, die Sequenz von Schweißungen, während das Werkstück (22, 24) hergestellt wird, anzupassen, indem er eine nicht-robotische Schweißung als eine nächste auszuführende Schweißung hinzufügt, wenn eine unmittelbar vorherige Schweißung in der Sequenz von Schweißungen eine robotische Schweißung ist, die als fehlerhaft bestimmt wurde, und wobei eine Stelle der nächsten nicht-robotisch auszuführenden Schweißung an dem Werkstück (22, 24) die gleiche ist wie eine Stelle der unmittelbar vorherigen Schweißung.

8. Schweißsystem nach einem der Ansprüche 1 bis 7, das des Weiteren mindestens einen Sensor umfasst, der mit der mindestens einen Schweißung der Sequenz von Schweißungen verknüpft ist, wobei der mindestens eine Sensor dafür konfiguriert ist, mindestens einen Qualitätsparameter zu erfassen, der mit dem Erzeugen der mindestens einen Schweißung verknüpft ist, und den mindestens einen Qualitätsparameter direkt oder indirekt an den Schweißsequenz-Controller zu übermitteln.

9. Schweißsystem nach Anspruch 8, wobei der mindestens eine Sensor mindestens eines von einem Sichtspektrumsensor (1110), einem Durchstrahlungssensor (1120), einem Lasersensor (1130), einem elektromagnetischen Sensor (1140), einem Infrarotsensor (1150), einem Temperatursensor (1160), einem Spektrometersensor (1170) und einem Ultraschallsensor (1180) umfasst.

10. Schweißsystem nach Anspruch 8 oder 9, wobei der mindestens eine Qualitätsparameter mit mindestens einem von einer Schweißposition an dem Werkstück (22, 24), einer Schweißraupengröße, einer Schweißraupenform, einer Einbrandtiefe, einer Schweißnahtverschmelzung, einer Schweißporosität, einer Schweißnahtrissbildung, Schweißnahteinschlüssen, Schweißfehlstellen, einem Lichtbogenplasmatyp und einer Lichtbogenplasmatemperatur in Beziehung steht.

## Revendications

1. Système de soudage comprenant une pièce d'ouvrage à fabriquer, une cellule de fabrication (900) prenant en charge le soudage d'une séquence de soudures pour fabriquer la pièce d'ouvrage (22, 24), la cellule de fabrication (900) comprenant :
un équipement de soudage robotique configuré pour réaliser des soudures robotique en tant qu'au moins une partie de la fabrication d'une pièce d'ouvrage (22, 24) ;
**caractérisé en ce que** la cellule de fabrication (900) comprend
un équipement de soudage non robotique configuré pour permettre à un opérateur humain de réaliser des soudures non robotiques en tant qu'au moins une partie de la fabrication de la pièce d'ouvrage ; et
un dispositif de commande de séquence de soudures (910) configuré pour commander une synchronisation associée à la réalisation des soudures robotiques et des soudures non robotiques en tant qu'une séquence de soudures pour fabriquer la pièce d'ouvrage (22, 24).

2. Système de soudage selon la revendication 1, dans lequel la synchronisation et la séquence de soudures sont prédéterminées et fixées avant le début du soudage.

3. Système de soudage selon la revendication 1 ou 2, dans lequel des emplacements des soudures non robotiques à réaliser pour fabriquer la pièce d'ouvrage ne peuvent pas être atteints par l'équipement de soudage robotique.

4. Système de soudage selon l'une quelconque des revendications 1 à 3, dans lequel le dispositif de commande de séquence de soudures (910) est configuré pour adapter au moins l'une parmi une position et une synchronisation d'une soudure suivante à réaliser dans la séquence de soudures, pendant la fabrication de la pièce d'ouvrage (22, 24), sur la base d'un état d'une soudure précédente de la séquence de soudures.

5. Système de soudage selon l'une quelconque des revendications 1 à 4, dans lequel le dispositif de commande de séquence de soudures (910) est configuré pour adapter la séquence de soudures, pendant la fabrication de la pièce d'ouvrage (22, 24), par l'ajout d'une soudure non robotique en tant qu'une soudure suivante à réaliser lorsqu'une soudure immédiatement précédente dans la séquence de soudures est une soudure robotique qui a été manquée par l'équipement de soudage robotique, et dans lequel un emplacement de la pièce d'ouvrage (22, 24) de la soudure suivante à réaliser, de manière non robotique, est le même qu'un emplacement de la soudure immédiatement précédente.

6. Système de soudage selon l'une quelconque des revendications 1 à 5, dans lequel le dispositif de commande de séquence de soudures (910) est configuré pour déterminer si une soudure immédiatement précédente réalisée, dans la séquence de soudures, est défectueuse sur la base d'au moins un paramètre de qualité de la soudure immédiatement précédente réalisée.

7. Système de soudage selon l'une quelconque des revendications 1 à 6, dans lequel le dispositif de commande de séquence de soudures (910) est configuré pour adapter la séquence de soudures, pendant la fabrication de la pièce d'ouvrage (22, 24), par l'ajout d'une soudure non robotique en tant qu'une soudure suivante à réaliser lorsqu'une soudure immédiatement précédente dans la séquence de soudures est une soudure robotique qui a été déterminée comme étant défectueuse, et dans lequel un emplacement de la pièce d'ouvrage (22, 24) de la soudure suivante à réaliser, de manière non robotique, est le même qu'un emplacement de la soudure immédiatement précédente.

8. Système de soudage selon l'une quelconque des revendications 1 à 7, comprenant en outre au moins un capteur associé à l'au moins une soudure dans la séquence de soudures, dans lequel l'au moins un capteur est configuré pour détecter au moins un paramètre de qualité associé à la génération de l'au moins une soudure et rapporter l'au moins un paramètre de qualité, directement ou indirectement, au dispositif de commande de séquence de soudures.

9. Système de soudage selon la revendication 8, dans lequel l'au moins un capteur inclut au moins l'un parmi un capteur de spectre visuel (1110), un capteur radiographique (1120), un capteur laser (1130), un capteur électromagnétique (1140), un capteur infrarouge (1150), un capteur de température (1160), un capteur spectrométrique (1170), et un capteur ultrasonique (1180).

10. Système de soudage selon la revendication 8 ou 9, dans lequel l'au moins un paramètre de qualité est lié à au moins l'un parmi une position de soudure sur la pièce d'ouvrage (22, 24), une taille de cordon de soudure, une forme de cordon de soudure, une pénétration de soudure, une fusion de soudure, une porosité de soudure, une fissure de soudure, une inclusion de soudure, une discontinuité de soudure, un type de plasma à arc et une température de plasma à arc.
